# EUROPÄISCHE PATENTSCHRIFT

(11) **EP 1 440 240 B1**
(45) Veröffentlichungstag und Bekanntmachung des Hinweises auf die Patenterteilung: **02.12.2009**
(21) Anmeldenummer: 02801875.2
(22) Anmeldetag: 27.09.2002
(51) Int. Cl.: F03B 13/10, F03B 13/08

(54) **GENERATOR FÜR EIN WASSERKRAFTWERK**
GENERATOR FOR A HYDRO-ELECTRIC STATION
GENERATEUR POUR UNE CENTRALE HYDROELECTRIQUE

(30) Priorität: 19.10.2001 DE 10152712
(43) Veröffentlichungstag der Anmeldung: 28.07.2004
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2002/010840
(87) Internationale Veröffentlichungsnummer: WO 2003/036080

(56) Entgegenhaltungen:
- WO-A-01/14739
- FR-A- 990 189
- FR-A- 1 078 450
- FR-A- 1 082 831
- JP-A- 8 145 051
- JP-A- 58 015 456
- JP-U- 5 276 849
- JP-Y- 41 018 815
- US-A- 4 616 298
- US-A- 4 720 640
- US-A- 5 506 453
- US-A- 5 798 572
- US-A- 6 104 097
- US-B1- 6 417 578
- US-B1- 6 448 668
- US-B1- 6 641 327
- US-B2- 6 483 199
- US-B2- 6 559 554
- US-B2- 6 806 586

## Beschreibung

Die vorliegende Erfindung betrifft einen Generator mit einem Ständer (Stator) und einem drehbar gelagerten Läufer, mit auf dem Läufer einwirkenden ersten Schaufelblättern, die eine Rotation des Läufers bewirken, sowie ein Wasserkraftwerk mit einem solchen Generator.

Ein Generator für ein Wasserkraftwerk ist aus dem Stand der Technik, beispielsweise aus CH 31 69 00, FR 1 082 831, DE-A1 199 07 180 sowie US 4 289 971 bekannt.

Diese Art von Generatoren ist allgemein bekannt und findet z.B. bei Fallwasser-Kraftwerken an Stauseen Verwendung. Bei allen Generatoren besteht natürlich eine Wechselwirkung zwischen Baugröße und Umdrehungszahl. Je höher die Umdrehungszahl des Läufers (z.B. Pelton Turbine) ist, umso kleiner kann der Generator bei gleicher Leistung gebaut werden - anders herum ausgedrückt: Je langsamer der Läufer dreht (z.B. Francis-Turbine), umso größer baut der Generator.

Natürlich besteht die Möglichkeit, zwischen den eine Rotation des Läufers bewirkenden ersten Schaufelblättern und dem Läufer des Generators ein Getriebe vorzusehen, welches eine hohe Drehzahl des Läufers herbeiführt. Dadurch könnte der Generator selbst relativ klein ausfallen. Allerdings verringert das Getriebe den Wirkungsgrad der Anlage, bildet eine potentielle Störungsquelle und muss natürlich mit einem ausreichend große Drehmoment angetrieben werden, das wiederum entsprechend große Einrichtungen wie Rotorblätter oder Schaufelblätter erfordert.

Aus dem französischen Patent FR 990 189, das als nächstliegender Stand der Technik angesehen wird, ist ein Generator mit einem Ständer und einem drehbar gelagerten Läufer bekannt, mit auf den Läufer einwirkenden ersten Schaufelblättern, die eine Rotation des Läufers in eine erste Drehrichtung bewirken, wobei der Ständer drehbar gelagert ist und auf den Ständer einwirkende zweite Schaufelblätter vorgesehen sind, die eine Rotation des Ständers in einer der Rotation des Läufers entgegengesetzten Richtung bewirken. Aus der WO 01/14739 A1 ist ein elektrisches Generatorsystem mit einer Mehrzahl von einheitlichen Hydraulikturbinen bekannt, die koaxial zueinander angeordnet sind. Aus der EP 0 222 352 A2 ist ein Generator bekannt, der in einem Flussbett installiert ist und dessen Welle mit wassergeschmierten Lagern ausgerüstet ist.

Aufgabe der vorliegenden Erfindung ist es, einen Generator anzugeben, der die mit der Verwendung eines Getriebes einhergehenden Nachteile vermeidet, aber dennoch klein gebaut ist.

Diese Aufgabe wird bei einem Generator der eingangs genannten Art erfindungsgemäß dadurch gelöst, dass der Ständer drehbar gelagert ist, und dass auf den Ständer einwirkende zweite Schaufelblätter vorgesehen sind, die eine Rotation des Ständers in einer der Rotation des Läufers entgegengesetzten Richtung bewirken.

Der vorliegenden Erfindung liegt dabei die Erkenntnis zugrunde, dass das Kriterium für die Baugröße des Generators die relative Geschwindigkeit zwischen dem Läufer und dem Ständer des Generators ist. Bei einem feststehenden Ständer ergibt sich diese allein aus der Rotationsgeschwindigkeit des Läufers. Wird aber der Ständer drehbar gelagert und in einer Richtung entgegengesetzt zur Drehrichtung des Läufers gedreht, addieren sich beide Geschwindigkeiten, so dass die Summer beider Rotationsgeschwindigkeiten wirksam wird. Dementsprechend lässt sich bei gleicher Leistung die Größe des Generators halbieren.

Um einen einfachen Aufbau des Generators zu verwirklichen, wirken in einer bevorzugten Ausführungsform der Erfindung die ersten und/oder zweiten Schaufelblätter über eine Welle auf den Läufer bzw. auf den Ständer ein.

Damit ein Betrieb in einem flüssigen Medium wie Wasser möglich ist, muss der Generator in einem Gehäuse sicher vor Feuchtigkeit geschützt werden. Um eine einfache Ausbildung des Gehäuses zu verwirklichen, ist dieses mehrteilig ausgebildet und der Ständer ist in einem wasserdicht abschließenden Teil des Gehäuses gelagert, das wiederum drehbar gelagert und an dessen Außenseite die zweiten Schaufelblätter angeordnet sind. Auf diese Weise können die zweiten Schaufelblätter eine Rotation des Gehäuses mit dem eingebauten Ständer bewirken.

In diesem Gehäuse kann wiederum eine Läufer-Welle drehbar gelagert sein, die einerseits den Läufer trägt und andererseits an einem außerhalb des Gehäuses liegenden Abschnitt einen weiteren Gehäuseabschnitt trägt, an dem die ersten Schaufelblätter angebracht sind, um eine Rotation der Welle und damit des Läufers des Generators zu bewirken.

In einer insbesondere bevorzugten Weiterbildung der Erfindung ist der Abstand der Schaufelblätter zueinander so bemessen, dass die Aqua-Fauna möglichst wenig gefährdet ist. Dies betrifft einerseits den Abstand der ersten und zweiten Schaufelblätter untereinander jeweils in Umfangsrichtung und andererseits den Abstand der ersten und zweiten Schaufelblätter zueinander, um zu vermeiden, dass z.B. Fische den ersten und zweiten Schaufelblättern gleichzeitig ausgesetzt sind.

Bevorzugte Ausführungsformen der Erfindung sind in den Unteransprüchen angegeben.

Nachfolgend wird die Erfindung anhand der beigefügten Figuren näher erläutert. Dabei zeigen:
- Figur 1: eine vereinfachte Querschnitts-Darstellung eines erfindungsgemäßen Generators; und
- Figur 2: den Druckverlauf im Wasser beim Durchströmen des Generators.

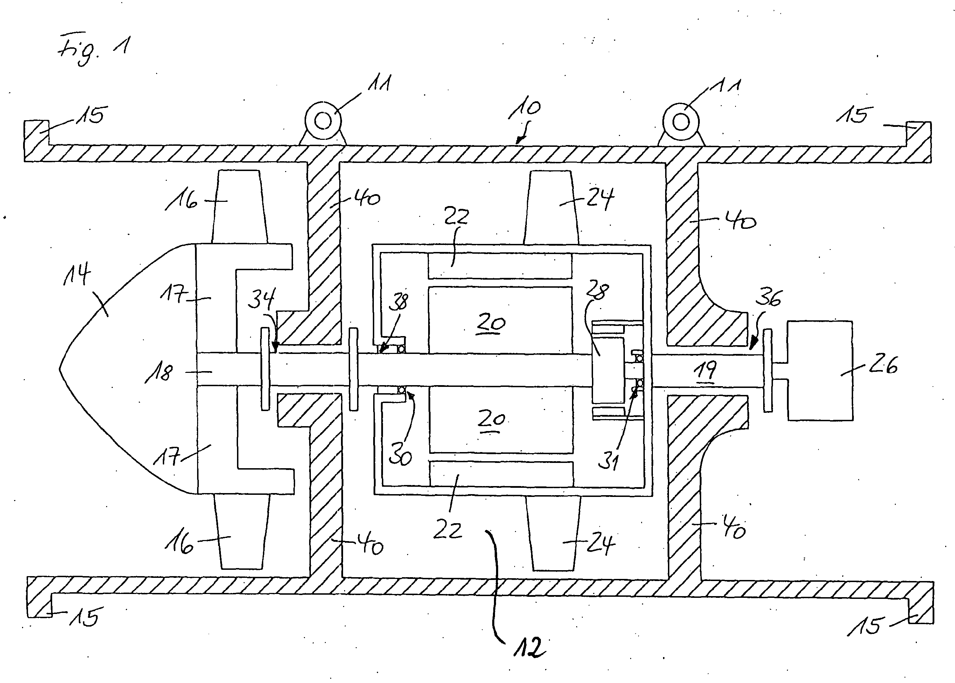

Figur 1 zeigt einen in einem Strömungskanal 10 angeordneten Generator. Die Strömungsrichtung des Wassers ist dabei in der Figur von links nach rechts. Getragen wird der Generator von Stützen 40, die in der Figur Bestandteil des Strömungskanals 10 sind. Natürlich können diese Stützen 40 in einem vorhandenen Strömungskanal 10 zusammen mit dem Generator ebenso nachträglich eingebaut werden.

Dabei ist der Strömungskanal 10 rohrförmig ausgebildet und weist an seinen Enden Flansche 15 auf, mit denen eine Verbindung zu bereits vorhandenen Kanal-Abschnitten (nicht dargestellt) hergestellt werden kann. Diese Ausführungsform erlaubt eine Montage bzw. Instandsetzung des Generators in dem aus den übrigen Kanalabschnitten herausgelösten Strömungskanal 10. Da auf dem Strömungskanal 10 Tragösen 11 vorgesehen sind, ist ein Austauschen bzw. Herauslösen des Strömungskanal 10 aus den übrigen Kanalabschnitten entsprechend einfach zu bewerkstelligen.

Der in dem Strömungskanal 10 dargestellt Generator weist im Wesentlichen zwei Gehäuseabschnitte auf, einen vorderen Abschnitt 14 und einen hinteren Abschnitt 12. Dabei ist der vordere Gehäuseabschnitt 14 strömungsgünstig ausgebildet und vermeidet einen Stau des strömenden Wassers vor dem Generator.

Der hintere Gehäuseabschnitt 12 nimmt den Generator mit dem Läufer und dem Ständer 22 auf und enthält weiterhin eine Erregermaschine 28 zum Übertragen der Erregerleistung auf den Läufer 22 des Generators.

Da eine Relativbewegung zwischen dem Läufer 20 und dem Ständer 22 erforderlich ist, ist der Läufer 20 mit einer Läuferwelle 18 in dem hinteren Gehäuseteil 12 gehalten und drehbar gelagert. Diese Lagerung erfolgt hier beispielhaft über Drehverbindungen 30 und 31 als vorderes und hinteres Läuferlager. Um den hinteren Gehäuseabschnitt 12 gegen das Wasser abzudichten, ist eine Dichtung 38 vorgesehen, die in der Figur vereinfacht als einzelne Dichtlippe dargestellt ist, jedoch auch als jede andere geeignete Dichtung ausgeführt sein kann.

Der Generator ist in den Stützen 40 mit einem vorderen wassergeschmierten Lager 34 und einem hinteren wassergeschmierten Lager 36 angeordnet. Diese wassergeschmierten Lager 34, 36 werden durch permanente Zuführung des Schmiermittels - nämlich Wasser - während des Betriebs zuverlässig geschmiert. Weiterhin besteht keine Gefährdung des durchströmenden Wassers durch andere Schmierstoffe wie Fette o.ä.

Durch diese Lagerung ist eine Rotation des Läufers 20 und Ständers 22 des Generators in entgegengesetzten Richtungen möglich. Um die Erregerleistung zuzuführen und die erzeugte elektrische Leistung abzuführen, muss die in dem hinteren, wassergeschmierten Lager 36 gelagerte Welle 19 als Hohlwelle ausgeführt sein, um eine Durchführung von Kabeln von einem Schleifringkörper 26 in das Innere des hinteren Gehäuseabschnittes 12 zu ermöglichen. Um die Übersichtlichkeit der Figur nicht unnötig einzuschränken, ist der Kabelverlauf nicht dargestellt.

Nachfolgend wird die Wirkungsweise dieses Generators beschrieben. Das durch den Strömungskanal 10 strömende Wasser trifft zunächst auf die ersten Schaufelblätter 16. Diese ersten Schaufelblätter 16 sind mit einem solchen Anstellwinkel über eine Nabe 17 mit der Läuferwelle 18 verbunden, dass diese in eine Rotation, z.B. rechts herum, versetzt wird. Dabei sind die Nabe 17 und die Schaufelblätter 16 derart bemessen, dass sie etwa die Hälfte der kinetischen Energie des Wasser aufnehmen und in Rotation umwandeln.

Nachdem das Wasser in dem Strömungskanal 10 weitergeströmt ist erreicht es den hinteren Gehäuseabschnitt 12 mit den zweiten Schaufelblättern 24. Dabei ist der Anstellwinkel dieser Schaufelblätter 24 so gewählt, und die Schaufelblätter 24 sind so bemessen, dass das anströmende Wasser den hinteren Gehäuseabschnitt 12 mit dem darin befestigten Stator 22 des Generators ebenfalls in Rotation versetzt. In dem vorliegenden Beispiel sei die Drehrichtung links herum. Die Schaufeln 24 entziehen dem Wasser dabei wiederum etwa die Hälfte der kinetischen Energie und wandeln diese in Rotationsenergie um.

Da sich der hintere Gehäuseabschnitt 12 mit dem Stator gegenüber dem Strömungskanal 10 dreht und sich der vordere Gehäuseabschnitt 14 mit dem Läufer 20 wiederum gegenüber dem hinteren Gehäuseabschnitt 12 dreht, wird die Erregerleistung über den Schleifringkörper 26 durch die als Hohlwelle ausgebildete Welle 19 und eine Erregermaschine 28 dem Läufer 20 des Generators zugeführt und die in dem Ständer 22 des Generators induzierte, elektrische Leistung wird wiederum durch die Hohlwelle 19 und den Schleifringkörper 26 vor dem Generator abgeführt.

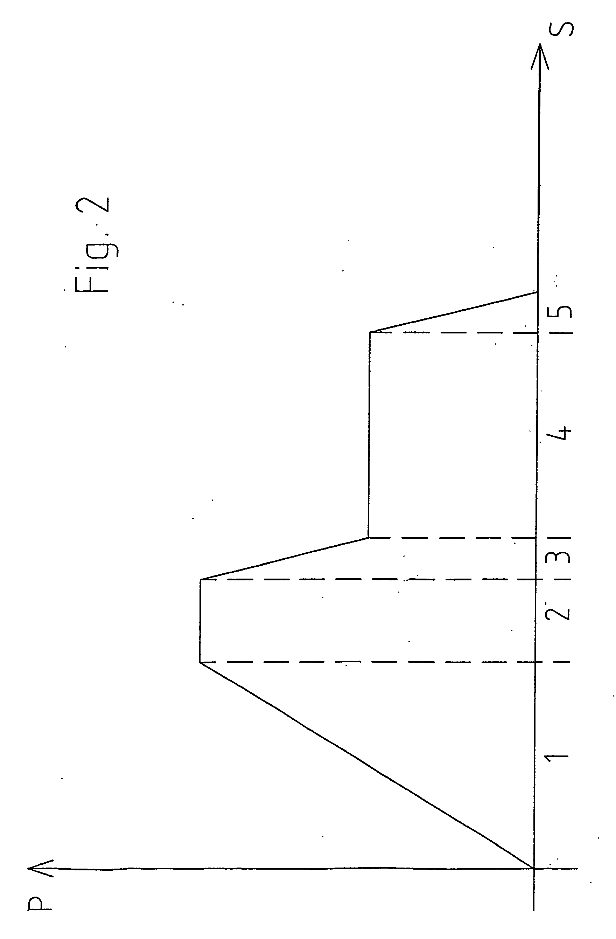

In Figur 2 ist der Druckverlauf im Wasser in dem Strömungskanal 10 dargestellt. Da die ersten Schaufelblätter 16 und die zweiten Schaufelblätter 24 so ausgelegt sind, dass sie dem Wasser jeweils etwa die Hälfte der kinetischen Energie entziehen, und da die ersten Schaufelblätter 16 und die zweiten Schaufelblätter 24 mit einer relativ geringen Geschwindigkeit umlaufen, sind die Auswirkungen des erfindungsgemäßen Generators auf Fische in dem Strömungskanal 10 nicht so gravierend, wie die Auswirkungen vergleichbarer, konventioneller Generatoren.

Dies ergibt sich insbesondere daraus, dass bei konventionellen Generatoren nur ein Schaufelsatz vorhanden ist, der dem Wasser im günstigsten Fall die gesamte kinetische Energie entzieht und diese in Rotationsenergie umwandelt. Dementsprechend tritt beim Durchfließen dieser Stufe der maximal mögliche Druckabfall auf. Bei dem erfindungsgemäßen Generator verteilt sich der Druckabfall auf zwei Stufen mit jeweils etwa der Hälfte des Betrags und damit entsprechend weniger gravierenden Auswirkungen auf die Aqua-Fauna.

Durch die Auslegung und Anordnung der Schaufeln kann auf den Einbau von Leitblechen verzichtet werden, die bei konventionellen Generatoren erforderlich sind, um das in den Generator hineinströmende Wasser in Rotation zu versetzen oder die von einem konventionellen Generator bewirkte Rotation wieder aufzuheben. Diese Funktion wird hier von den sich entgegengesetzt drehenden ersten Schaufelblättern 16 und zweiten Schaufelblättern 24 übernommen. Das einströmende Wasser wird also von den ersten Schaufelblättern 16 entsprechend der Drehrichtung der ersten Schaufelblätter 16 in eine Rechts-Rotation versetzt. Da die zweiten Schaufelblätter 24 jedoch eine Links-Rotation ausführen, wird diese Rechts-Rotation dadurch wieder ausgeglichen, so dass das abströmende Wasser weitgehend drucklos und geradlinig aus dem Strömungskanal 10 austritt.

## Patentansprüche

1. Generator, insbesondere für ein Wasserkraftwerk, mit einem Ständer (22) und einem drehbar gelagerten Läufer (20), mit auf den Läufer (20) einwirkenden ersten Schaufelblättern (16) mit einem Anstellwinkel, die eine Rotation des Läufers (20) in eine erste Drehrichtung bewirkt,
wobei der Ständer (22) drehbar gelagert ist und dass auf den Ständer (22) einwirkende zweite Schaufelblätter (24) mit einem Anstellwinkel vorgesehen sind, der eine Rotation des Ständers (22) in einer der Rotation des Läufers (20) entgegengesetzten Richtung bewirkt,
wobei die ersten Schaufelblätter (16) und/oder die zweiten Schaufelblätter (24) über eine Welle auf den Läufer (20) bzw. den Ständer (22) einwirken und die Welle von einem wassergeschmierten Lager aufgenommen ist,
wobei die ersten und zweiten Schaufelblätter (16, 24) an dem Gehäuse (12, 14) angeordnet sind,
wobei das Gehäuse (12, 14) mehrteilig ausgebildet ist, und die ersten und zweiten Schaufelblätter (16, 24) an verschiedenen Gehäuseteilen (12, 14) angeordnet sind.

2. Generator nach Anspruch 1,
**dadurch gekennzeichnet, dass** das Gehäuse (12, 14) drehbar gelagert ist, und dass der Ständer (22) in dem Gehäuse (12) angeordnet ist und dass der Läufer (20) drehbar in dem Gehäuse (12) gelagert ist.

3. Generator nach einem der vorstehenden Ansprüche,
**dadurch gekennzeichnet, dass** der Abstand zwischen den Schaufelblättern so bemessen ist, dass die Aqua-Fauna möglichst wenig gefährdet ist.

4. Wasserkraftwerk mit wenigstens einem Generator nach einem der vorstehenden Ansprüche,
**dadurch gekennzeichnet, dass** der Generator in einem Strömungskanal (10) eingebaut ist und dass der Strömungskanal (10) am Umfang seiner Eintritts- und/oder Austrittsöffnung Flansche (15) zur Verbindung mit anderen Kanalabschnitten aufweist.

5. Wasserkraftwerk nach Anspruch 4,
**dadurch gekennzeichnet, dass** Angriffspunkte (11) für Lasthebezeuge an vorgegebenen Positionen des Strömungskanals (10) vorgesehen sind.

## Claims

1. Generator, especially for a hydroelectric power station, having a stator (22) and a rotatably supported rotor (20), and first vanes (16) which act on the rotor (20) and which have a pitch that causes rotation of the rotor (20) in a first direction of rotation,
wherein the stator (22) is rotatably supported, and second vanes (24) are provided, which act on the stator (22) and which have a pitch that causes rotation of the stator (22) in a direction opposite to the rotation of the rotor (20),
wherein the first vanes (16) and/or the second vanes (24) act on the rotor (20) and the stator (22), respectively, via a shaft, and the shaft is received by a water-lubricated bearing,
wherein the first and second vanes (16, 24) are arranged on the housing (12, 24),
wherein the housing (12,14) is of a multi-part configuration and the first and second vanes (16, 24) are arranged on different housing parts (12, 14).

2. Generator according to claim 1,
**characterised in that** the housing (12, 14) is rotatably supported and the stator (22) is arranged in the housing (12) and the rotor (20) is rotatably supported in the housing (12).

3. Generator according to either of the preceding claims,
**characterised in that** the spacing between the vanes is such that the aquatic fauna is put at risk to the least possible extent.

4. Hydroelectric power station comprising at least one generator according to any one of the preceding claims,
**characterised in that** the generator is installed in a flow passage (10) and that, at the periphery of its intake and/or outlet opening, the flow passage (10) has flanges (15) for connection to other passage portions.

5. Hydroelectric power station according to claim 4,
**characterised in that** engagement points (11) for hoisting devices are provided at predetermined positions on the flow passage (10).

## Revendications

1. Générateur, en particulier pour une centrale hydroélectrique, avec un stator (22) et un rotor (20) monté en rotation, avec des premières pales (16) agissant sur le rotor (20) avec un angle d'incidence provoquant une rotation du rotor (20) dans un premier sens de rotation,
dans lequel le stator (22) est monté en rotation et des deuxièmes pales (24) agissant sur le stator (22) sont prévues avec un angle d'incidence qui provoque une rotation du stator (22) dans un sens opposé à la rotation du rotor (20),
dans lequel les premières pales (16) et/ou les deuxièmes pales (24) agissent par l'intermédiaire d'un arbre sur le rotor (20) ou le stator (22) et l'arbre est reçu par un palier lubrifié à l'eau,
dans lequel les premières et deuxièmes pales (16, 24) sont disposées au niveau du boîtier (12, 14),
dans lequel le boîtier (12, 14) est réalisé en plusieurs parties et les premières et deuxièmes pales (16, 24) sont disposées sur différentes parties de boîtier (12, 14).

2. Générateur selon la revendication 1, **caractérisé en ce que** le boîtier (12, 14) est monté en rotation, et **en ce que** le stator (22) est disposé dans le boîtier (12), et **en ce que** le rotor (20) est monté en rotation dans le boîtier (12).

3. Générateur selon l'une quelconque des revendications précédentes, **caractérisé en ce que** l'espacement entre les pales est dimensionné de telle sorte que la faune aquatique est mise en danger le moins possible.

4. Centrale hydroélectrique avec au moins un générateur selon l'une quelconque des revendications précédentes, **caractérisée en ce que** le générateur est installé dans un canal d'écoulement et **en ce que** le canal d'écoulement (10) présente sur la circonférence de son ouverture d'entrée et/ou de sortie des brides (15) pour un raccordement avec d'autres tronçons de canalisation.

5. Centrale hydroélectrique selon la revendication 4, **caractérisée en ce que** des points d'application (11) pour des engins de levage sont prévus dans des positions prédéfinies du canal d'écoulement (10).
